# EUROPEAN PATENT APPLICATION

(11) **EP 4 258 407 A1**
(43) Date of publication of application: **11.10.2023**
(21) Application number: 21900898.4
(22) Date of filing: 23.11.2021
(51) Int. Cl.: H01M 10/0567, H01M 4/66, H01M 10/052

(54) **RECHARGEABLE LITHIUM BATTERY**

(30) Priority: 04.12.2020 KR 20200168920
(71) Applicant: Samsung SDI Co., Ltd., Yongin-si, Gyeonggi-do 17084 (KR)
(72) Inventor: KANG, Yoon-Sok, Yongin-si, Gyeonggi-do 17084 (KR); KIM, Youngsoo, Yongin-si, Gyeonggi-do 17084 (KR); PARK, Jinhwan, Yongin-si, Gyeonggi-do 17084 (KR); HONG, Suk-Gi, Yongin-si, Gyeonggi-do 17084 (KR); HWANG, Taehyun, Yongin-si, Gyeonggi-do 17084 (KR)
(74) Representative: Marks & Clerk LLP
(86) International application number: PCT/KR2021/017224
(87) International publication number: WO 2022/119210

(57) **Abstract**

The present invention relates to a rechargeable lithium battery, the battery comprising: a positive electrode; a negative electrode; and an electrolyte comprising a smoothing additive having a reduction potential of at least -0.5 V, but less than 0.9 V.

## Description

### TECHNICAL FIELD

It relates to a lithium secondary battery.

### BACKGROUND ART

Recently, the rapid spread of electronic devices such as mobile phones, laptop computers, and electric vehicles using batteries requires surprising increases in demand for secondary batteries with relatively high capacity and lighter weight. Particularly, a lithium secondary battery has recently drawn attention as a driving power source for portable devices, as it has a lighter weight and high energy density. Accordingly, researches for improving performances of lithium secondary battery are actively progressing.

Recently, there are needs for a rechargeable lithium battery having highest energy density, and thus, lithium having a high specific capacity (about 3860 mAh/g) and low voltage (about -3.04 V vs. SHE) is expected, as a negative active material. However, when lithium metal is applied to the negative electrode, higher reactivity of lithium metal causes explosive reaction with water and reaction with oxygen in the atmosphere, and thus, it is difficult to prepare and use in general environment.

### TECHNICAL PROBLEM

One embodiment provides a rechargeable lithium battery exhibiting good cycle-life characteristics.

### TECHNICAL SOLUTION

One embodiment provides a rechargeable lithium battery including a positive electrode, a negative electrode, and an electrolyte including a smoothing additive having a reduction potential of -0.5 V or more and less than 0.9 V.

The smoothing additive may be butynediol, thiourea, or a combination thereof.

An amount of the smoothing additive may be 5 wt% or less, or 0.01 wt% to 5 wt%, based on the total, 100 wt%, of the electrolyte.

The electrolyte may further include a lithium salt and a non-aqueous organic solvent.

The negative electrode may include a current collector.

The negative electrode may include a coating layer including a current collector and a polymer positioned on the current collector. The polymer may be a polyvinylidene fluoride-based polymer, and examples thereof may be polyvinylidene fluoride, a copolymer of polyvinylidene fluoride and hexafluoropropylene (PVdF-HFP), or a combination thereof.

The coating layer may further include LiF.

### ADVANTAGEOUS EFFECTS

A lithium secondary battery according to an embodiment may exhibit excellent cycle-life characteristics.

### BRIEF DESCRIPTION OF THE DRAWING

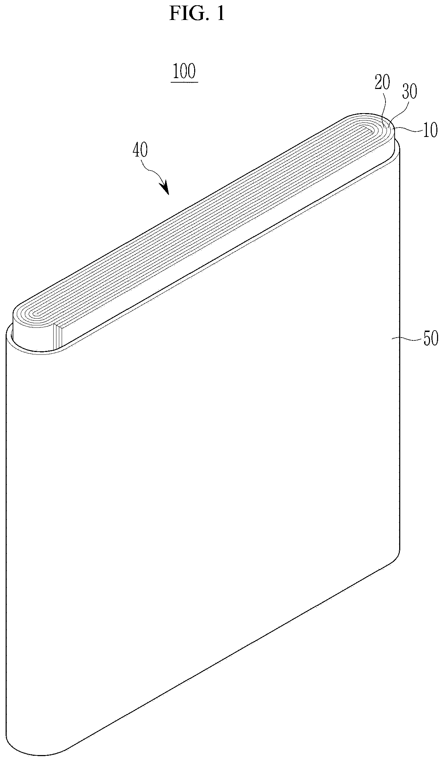

FIG. 1 is a schematic view showing the structure of a lithium secondary battery according to an embodiment.

### MODE FOR INVENTION

Hereinafter, embodiments are described in detail. However, these embodiments are just examples, the present invention is not limited thereto, and the present invention is defined by the scope of claims.

A rechargeable lithium battery according to one embodiment includes a positive electrode, a negative electrode, and an electrolyte including a smoothing additive having a reduction potential, i.e., a reduction potential to a lithium ion (vs. Li/Li⁺), of -0.5 V or more and less than 0.9.

The smoothing additive may be butynediol, thiourea, or a combination thereof. Such a smoothing additive does not decompose within the operation voltage range of the rechargeable lithium battery, and also is repeatedly adsorbed and desorbed to the surface of the negative electrode during charging and discharging.

Generally, during charging and discharging of the rechargeable lithium battery, lithium ions generated in the positive electrode are transferred to the negative electrode through the electrolyte, to be deposited on the surface of the negative electrode, and herein, they may not be uniformly adsorbed on the surface of the negative electrode, but may form a protrusion portion like a mountain shape with a sharp peak. In this case, a current is focused on the protrusion portion and the deposition of lithium ions is more accelerated, thereby the peak of the mountain gradually increases, and as a result, the safety is decreased, irreversible capacity, i.e., capacity loss, occurs, so that the cycle-life characteristics may be deteriorated.

Whereas, in the battery according to one embodiment, the negative electrode has the non-uniform surface which causes concentration of the current on the convex portion, and the smoothing additive included in the electrolyte may adhere to the convex portion prior to lithium ions, allowing adherence of lithium ions to portions other than the convex portion. This is because the smoothing additive has a reduction potential of -0.5 V or more and less than 0.9 V, which is lower than a reduction potential of lithium ions, and thus, it allows a slow reduction of the current collector due to the lithium ions during charging and discharging.

Thus, the effects according to the one embodiment may not be realized from using of other materials having the reduction potential out of the range as the smoothing additive.

As such, the smoothing additive is adhered on the convex of the surface of the negative electrode and lithium ions are adhered on the other portions, thereby forming a substantially smooth surface of the negative electrode without the unevenness. Thus, the deterioration of the negative electrode by charging and discharging may be prevented, thereby improving the cycle-life characteristics.

As the negative electrode, a current collector which is generally a negative electrode for an anodeless battery, i.e. an anode-free battery, may be used, or alternatively, one including a current collector and a coating layer including a polymer position on the current collector may be used. The effects from use of the smoothing additive may be more largely obtained for the negative electrode of the anodeless battery. This is because the anodeless battery does not include the negative active material and thus, there is a greater possibility of forming the unevenness having a mountain shape due to the adhesion of lithium ions from the early charging.

In the electrolyte, an amount of the smoothing additive may be 5 wt% or less, 0.01 wt% to 5 wt%, 0.1 wt% to 5 wt%, or 0.1 wt% to 0.5 wt%, based on the total, 100 wt%, of the electrolyte. When the amount of the smoothing additive is within the range, the effects for improving the cycle-life characteristics from the use of the smoothing additive may be more effectively obtained.

In the negative electrode for the anodeless battery, the polymer included in the coating layer may be a polyvinylidene fluoride-based polymer. The polyvinylidene fluoride-based polymer may be polyvinylidene fluoride, a copolymer of polyvinylidene fluoride and hexafluoropropylene copolymer (PVdF-HFP), or combinations thereof.

As such a rechargeable lithium battery includes a negative active material, it is economical and has advantageous in terms of energy density. In addition, during charging and discharging of the rechargeable lithium battery, lithium ions released from a positive active material are deposited on a negative current collector and lithium deposited on the negative current collector acts and is used as a negative active material. That is, lithium released from the positive active material during charging and discharging, is passed through a separator and the coating layer to accumulate on the current collector, thereby being positioned between the current collector and the coating layer. Thus, it uses lithium as an active material, allowing a high capacity and low voltage, and safety may be secured in the battery fabrication, as lithium metal is not used in the battery fabrication.

The coating layer according to one embodiment includes a polyvinylidene fluoride-based polymer and may further include LiF. As such, when the coating layer further includes LiF, the coating may have a higher dielectric constant, lower interfacial resistance, and reduced local current density, than a layer including only a polyvinylidene fluoride-based polymer. Accordingly, lithium ions which are released from the positive active material and are transferred to the negative electrode may be readily passed through the coating layer, and thus, lithium may be very uniformly deposited on the current collector, thereby suppressing growth of lithium dendrites.

If lithium dendrites are formed in accumulation of lithium on the current collector, they convert to dead lithium which does not participate to a charging and discharge reaction, while discharging in which conductive connection is stopped, and resultantly, capacity and cycle-life may be deteriorated. Furthermore, when lithium dendrites are continuously grown, they may pass through the separator to directly contact to the positive electrode, thereby causing the short circuit and thermal runaway, so that the safety may be deteriorated.

However, the negative electrode for a rechargeable lithium battery including the coating layer may effectively prevent the lithium dendrite growth, and thus, the problems caused by lithium dendrites may be effectively inhibited. In addition, the cycle-life characteristic may be improved, such that the more improved performances may be realized when the smoothing additive is used together therewith.

When the lithium secondary battery including the negative electrode is discharged, lithium positioned between the current collector and the coating layer is moved to the positive electrode, causing contact between the coating layer and the current collector. As the coating layer according to one embodiment has excellent mechanical strength, the structure may be well maintained, even after repeated charging and discharging, enabling stable charging and discharging and improving the cycle-life characteristics.

The coating layer may have a thickness of 1 µm to 10 µm, 1 µm to 7 µm, or 1 µm to 5 µm. The thickness of the coating layer within the range allows uniform deposition of lithium released from the positive active material on the current collector and improvement in the cycle-life characteristic.

The current collector may include one selected from a copper foil, a nickel foil, a stainless steel foil, a titanium foil, a nickel foam, a copper foam, a polymer substrate coated with a conductive metal, and a combination thereof, but is not limited thereto.

In one embodiment, when the negative electrode is one in which a coating layer is formed on the current collector, and the negative electrode may be prepared by coating a composition for a coating layer on the current collector. The coating layer composition may be prepared by mixing a polyvinylidene fluoride-based polymer and LiF in a solvent. The solvent may be any solvent being capable of well dissolving a polyvinylidene fluoride-based polymer and LiF, and examples thereof may be 2-hydroxypropyl methacrylamide (HPMA), 2,4,6-trimethylphenol (TMP), N-methyl-2-pyrrolidone (NMP), dimethylacetamide (DMAc), dimethylformamide (DMF), dimethyl sulfoxide (DMSO), or combinations thereof.

The mixing process may be performed by a ball mill process. Furthermore, in the mixing process, a mixing ratio of polyvinylidene fluoride and LiF may be suitably controlled and an amount of solids included in the solvent may be suitably controlled.

The coating process may be performed by any general procedure such as a doctor blade coating and the like.

After the coating is performed, drying may be performed. The drying may be performed at 25 °C to 80 °C. When the drying is performed within the temperature range, the coating layer may not be modified and the solvent may be substantially or completely dried. The time for drying may not be specifically limited, but may be 2 hours to 12 hours.

When the rechargeable lithium battery is formation charged and discharged, lithium ions released from the positive electrode transfer to the negative electrode, thereby depositing them on the current collector of the negative electrode, and thus, a lithium metal-included layer may be formed on the current collector. If the negative electrode including a current collector and a coating layer formed on the current collector, is used, the lithium metal-included layer may be formed between the current collector and the coating layer.

Thus, in the rechargeable lithium battery according to one embodiment, the negative electrode may include the current collector and the lithium metal-included layer, or alternatively, may include a current collector, a lithium metal-included layer, and a coating layer. The formation charge and discharge may be performed at 0.05 C to 1 C for 1 cycle to 3 cycles.

In the negative electrode, a thickness of the lithium metal-included layer may be suitably controlled depending on the amount of lithium included in the counter electrode, for example, the positive electrode, and may be for example, more than 0 µm and 100 µm or less. Furthermore, the thickness of the lithium metal-included layer may be controlled within the above thickness range depending on the charge and discharge state.

The positive electrode may include a current collector and a positive electrode active material layer formed on the current collector.

The positive electrode active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D₂ (0.90 ≤ a≤1.8, 0 ≤ b≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0 ≤ b ≤ 0.5, 0 ≤ c ≤ 0.05); LiₐE_{2-b}X_{b}O_{4-c}D_{c} (0 ≤ b ≤ 0.5, 0 ≤ c ≤ 0.05); LiₐNi_{1-b-c}Co_{b}X_{c}D_{α} (0.90 ≤a ≤1.8, 0 ≤ b ≤ 0.5, 0 ≤ c ≤ 0.5, 0 < α ≤2); LiₐNi_{1-b-c}Co_{b}X_{c}O_{2-α}T_{α} (0.90 ≤ a≤ 1.8, 0 ≤ b ≤ 0.5, 0 ≤ c ≤ 0.5, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.5, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.5, 0 < α ≤2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O_{2-α}T₂ (0.90 ≤ a≤ 1.8, 0 ≤ b ≤ 0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤0.1);LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤0.1);LiₐNiG_{b}O₂ (0.90 ≤ a ≤ 1.8, 0.001 ≤ b ≤ 0.1) LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤0.1);LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄Li_{(3-f)}J₂ PO₄₃ (0 ≤ f ≤2); Li_{(3-f)}Fe₂ PO₄₃ (0 ≤ f ≤ 2); LiₐFePO₄ (0.90 ≤ a ≤1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed by any method having no adverse influence on properties of a positive electrode active material by using these elements in the compound (for example, the method may include any coating method such as spray coating, dipping, and the like), but is not illustrated in more detail since it is well-known in the related field.

In the positive electrode, an amount of the positive electrode active material may be 90 wt% to 98 wt% based on the total weight of the positive electrode active material layer.

In an embodiment, the positive electrode active material layer may further include a binder and a conductive material. Herein, the binder may be included in an amount of 0.3 wt% to 5 wt% based on the total amount of the positive electrode active material layer, and the conductive material may be included in an amount of 0.5 wt% to 10 wt% based on the total amount of the positive active material layer.

The binder improves binding properties of positive electrode active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene butadiene rubber, an acrylated styrene-butadiene rubber, an epoxy resin, nylon, and the like, but is not limited thereto.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use Al, but is not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methyl propyl carbonate (MPC), ethyl propyl carbonate (EPC), ethyl methyl carbonate (EMC), ethylene carbonate (EC), propylene carbonate (PC), butylene carbonate (BC), vinyl ethylene carbonate, and the like. The ester-based solvent may include methyl acetate, ethyl acetate, n-propyl acetate, t-butyl acetate, methyl propionate, ethyl propionate, decanolide, mevalonolactone, caprolactone, and the like. The ether-based solvent may include diethyl ether, dibutyl ether, tetraglyme, diglyme, dimethoxyethane, 2-methyltetrahydrofuran, 2,5-dimethyltetrahydrofura, tetrahydrofuran, and the like. In addition, the ketone-based solvent may include cyclohexanone and the like. Furthermore, the alcohol-based solvent may include ethyl alcohol, isopropyl alcohol, and the like, and examples of the aprotic solvent include nitriles such as acetonitrile, propionitrile, butyronitrile, and the like, represented by R-CN (where R is a C2 to C20 linear, branched, or cyclic hydrocarbon, or may include a double bond, an aromatic ring, or an ether bond), amides such as dimethylformamide, dioxolanes such as 1,3-dioxolane, 1,4-dioxolane, sulfolanes, sulfoxides, and the like.

In addition, the non-aqueous organic solvent may include phosphorous-based solvent such as trimethyl phosphate, triethyl phosphate, triphenyl phosphate, tris(2,2,2-trifluoroethyl)phosphate, tris(2,2,2-trifluoroethyl)phosphite or combinations thereof, and may include sulfones such as dimethyl sulfone, ethylmethyl sulfone, or combinations thereof.

The organic solvent may be used alone or in a mixture, and when the organic solvent is used in a mixture, the mixture ratio may be controlled in accordance with a desirable battery performance.

Furthermore, the carbonate-based solvent may include a mixture with a cyclic carbonate and a linear carbonate. Herein, when the mixture of a cyclic carbonate and a linear carbonate mixed together in a volume ratio of about 1:1 to about 1:9 is used as an electrolyte, it may have enhanced performance.

The organic solvent may further include an aromatic hydrocarbon-based solvent as well as the carbonate-based solvent. Herein, the carbonate-based solvent and aromatic hydrocarbon-based solvent may be mixed together in a volume ratio of 1:1 to 30:1.

The aromatic hydrocarbon-based organic solvent may be an aromatic hydrocarbon-based compound represented by Chemical Formula 1. 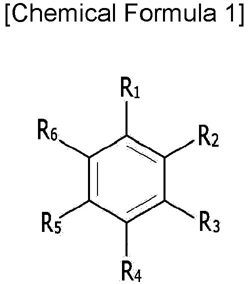 (In Chemical Formula 1, R₁ to R₆ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylene carbonate, or an ethylene carbonate-based compound represented by Chemical Formula 2, as an additive for improving cycle life. 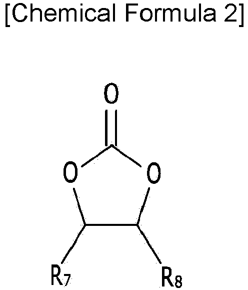 (In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.)

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. In case of further using the additive for improving cycle life, an amount of the additive may be suitably controlled within an appropriate range.

The lithium salt dissolved in an organic solvent supplies a battery with lithium ions, basically operates the lithium secondary battery, and improves transportation of the lithium ions between positive and negative electrodes. Examples of the lithium salt may include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), lithium bis(trifluoromethane sulfonyl)imide (LiTFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), where x and y are a natural numbers, for example integers of 1 to 20, lithium difluoro(bisoxalato) phosphate), LiCl, Lil, LiB(C₂O₄)₂ (lithium bis(oxalato) borate: LiBOB), and lithium difluoro(oxalato) borate, LiDFOB). A concentration of the lithium salt may range from 0.1 M to 2.0 M. When the lithium salt is included at the above concentration range, an electrolyte may have excellent performance and lithium ion mobility due to optimal electrolyte conductivity and viscosity.

The electrolyte may further LiNOs as an additive, and an amount of the additive may be more than 0 wt% and 2 wt% or less, or 0.1 wt% to 0.5 wt% based on the total, 100 wt%, of the electrolyte. When the electrolyte further includes LiNOs, the deposition of lithium on the current collector of the negative electrode during charging may form a more stable lithium layer.

The lithium secondary battery may further include a separator between the negative electrode and the positive electrode, depending on a kind of the battery. Examples of a suitable separator material may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 1 is an exploded perspective view of a lithium secondary battery according to one embodiment. The lithium secondary battery according to an embodiment is illustrated as a prismatic battery but is not limited thereto, and may include variously-shaped batteries such as a cylindrical battery, a pouch battery, and the like.

Referring to FIG. 1, a lithium secondary battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

### MODE FOR PERFORMING THE INVENTION

Hereinafter, examples of the present invention and comparative examples are described. These examples are not in any sense to be interpreted as limiting the scope of the invention.

### (Example 1)

A butynediol (reduction potential (vs. Li/Li⁺): 0.2 V) as a smoothing additive was added to a mixed solvent of fluoroethylene carbonate and diethyl carbonate (DEC) (1:2 volume ratio) in which 0.6 M lithium difluoro(oxalato) borate (LiDFOB) and 0.6 M LiBF₄ were dissolved, to prepare an electrolyte. The amount of the butynediol as the smoothing additive was set to be 0.1 wt% based on the total, 100 wt%, of the electrolyte.

As the negative electrode, a copper foil current collector was used.

A LiNi_{0.8}Co_{0.1}Mn_{0.1}O₂ positive active material, a ketjen black conductive material, and a polyvinylidene fluoride binder were mixed in an N-methyl pyrrolidone solvent to prepare a positive active material slurry. A positive electrode having a capacity of 5 mAh/cm² was prepared by the general procedure of coating on an Al foil, drying, and pressurizing.

Using the electrolyte, the negative electrode, and the positive electrode, a half-cell was fabricated by the general procedure.

### (Example 2)

An electrolyte was prepared by the same procedure as in Example 1, except that 0.1 wt% of thiourea (reduction potential (vs. Li/Li⁺): 0.1 V) was used as the smoothing additive, instead of 0.1 wt% of butynediol.

Using the electrolyte, the negative electrode, and the positive electrode, a half-cell was fabricated by the general procedure.

### (Comparative Example 1)

An electrolyte was prepared by the same procedure as in Example 1, except for not adding the smoothing additive.

Using the electrolyte and the negative electrode and the positive electrode prepared in Example 1, a half-cell was fabricated by the general procedure.

### (Comparative Example 2)

An electrolyte was prepared by the same procedure as in Example 1, except that 0.1 wt% of benzotriazole (reduction potential (vs. Li/Li+): 0.9 V) was used as the smoothing additive, instead of 0.1 wt% of butynediol.

Using the electrolyte and the negative electrode and the positive electrode prepared in Example 1, a half-cell was fabricated by the general procedure.

### (Comparative Example 3)

An electrolyte was prepared by the same procedure as in Example 1, except that 0.1 wt% of saccharin (reduction potential (vs. Li/Li⁺): 1.4 V) was used as the smoothing additive, instead of 0.1 wt% of butynediol.

Using the electrolyte and the negative electrode and the positive electrode prepared in Example 1, a half-cell was fabricated by the general procedure.

### (Comparative Example 4)

An electrolyte was prepared by the same procedure as in Example 1, except that 0.1 wt% of coumarin (reduction potential (vs. Li/Li⁺): 1.3 V) was used as the smoothing additive, instead of 0.1 wt% of butynediol.

Using the electrolyte and the negative electrode and the positive electrode prepared in Example 1, a half-cell was fabricated by the general procedure.

### Experimental Example 1: Evaluation of capacity retention

The half-cells according to Examples 1 and 2 and Comparative Examples 1 to 4 were formation charged and discharged at 0.1 C once. The formation charged and discharged cells were charged and discharged of 0.2 C charge/0.5 C discharge for 100 cycles. The ratio of the 100^{th} discharge capacity relative to the 1^{st} discharge capacity was measured, and the results are shown in Table 1.

**(Table 1)**

| | Example 1 | Example 2 | Comparative Example 1 | Comparative Example 2 | Comparative Example 3 | Comparative Example 4 |
|---|---|---|---|---|---|---|
| Capacity retention (%) | 85.8 | 85.2 | 84.6 | 82.1 | 80.1 | 82.2 |

As shown in Table 1, Examples 1 and 2 using butanediol or thiourea having a reduction potential of less than 0.9 V as the smoothing additive exhibited surprisingly excellent capacity retention, compared to Comparative Example 1 without the smoothing additive and Comparative Examples 2 to 4 using the smoothing additive having the reduction potential of 0.9 V or more.

While this disclosure has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A rechargeable lithium battery, comprising:
a positive electrode;
a negative electrode; and
an electrolyte comprising a smoothing additive having a reduction potential of -0.5 V or more and less than 0.9 V.

2. The rechargeable lithium battery of claim 1, wherein the smoothing additive is butynediol, thiourea, or a combination thereof.

3. The rechargeable lithium battery of claim 1, wherein an amount of the smoothing additive is 5 wt% or less based on the total, 100 wt%, of the electrolyte.

4. The rechargeable lithium battery of claim 1, wherein an amount of the smoothing additive is 0.01 wt% to 5 wt% based on the total, 100 wt%, of the electrolyte.

5. The rechargeable lithium battery of claim 1, wherein the electrolyte further comprises a lithium salt and a non-aqueous organic solvent.

6. The rechargeable lithium battery of claim 1, wherein the negative electrode comprises a current collector.

7. The rechargeable lithium battery of claim 1, wherein the negative electrode comprises a coating layer including a current collector and a polymer positioned on the current collector.

8. The rechargeable lithium battery of claim 7, wherein the polymer is a polyvinylidene fluoride-based polymer.

9. The rechargeable lithium battery of claim 7, wherein the polymer is polyvinylidene fluoride, a copolymer of polyvinylidene fluoride and hexafluoropropylene (PVdF-HFP), or a combination thereof.

10. The rechargeable lithium battery of claim 7, wherein the coating layer further comprises LiF.
